# EUROPEAN PATENT SPECIFICATION

(11) **EP 3 277 416 B1**
(45) Date of publication and mention of the grant of the patent: **24.04.2019**
(21) Application number: 16714369.2
(22) Date of filing: 31.03.2016
(51) Int. Cl.: B05B 12/00, G01N 21/94, B01J 2/00, B01J 2/04, B05B 12/08, F26B 3/12, G01N 21/88, B05B 15/50, B01J 2/02

(54) **A METHOD AND A SYSTEM FOR MONITORING SPRAY NOZZLES IN A SPRAY DRYING OR SPRAY COOLING CHAMBER**
VERFAHREN UND VORRICHTUNG ZUR ÜBERWACHUNG VON SPRÜHDÜSEN IN EINER SPRÜHTROCKNUNG- ODER SPRÜHKÜHLUNGSKAMMER
PROCÉDÉ ET SYSTÈME PERMETTANT DE SURVEILLER DES BUSES DE PULVÉRISATION DANS UNE CHAMBRE DE SÉCHAGE PAR PULVÉRISATION OU DE REFROIDISSEMENT PAR PULVÉRISATION

(30) Priority: 01.04.2015 DK 201500205
(43) Date of publication of application: 07.02.2018
(73) Proprietor: Spx Flow Technology Danmark A/S, 2860 Søborg (DK)
(72) Inventor: FRIDBERG, HOLM, Christian, DK-2730 Herlev (DK); SCHØNFELDT, Henrik, DK-2820 Gentofte (DK)
(74) Representative: Nordic Patent Service A/S
(86) International application number: PCT/EP2016/057080
(87) International publication number: WO 2016/156503

(56) References cited:
- EP-A1- 0 296 136
- WO-A1-02/061427
- US-A- 5 520 371
- US-A1- 2012 287 285

## Description

### TECHNICAL FIELD

The present invention relates to the field of monitoring changes in the performance of spray nozzles feeding a feed material to be spray dried into a spray drying chamber or feeding a feed material to be spray cooled into a spray cooling chamber.

### BACKGROUND

Spray drying and spray cooling is a well-known process for turning a liquid product into a powder product. The drying or cooling takes place in a drying or cooling chamber, in which the drying air or cooling air is brought into contact with the feed, i.e. the liquid being atomized into droplets, by one or more nozzles or other forms of atomizer, such as a rotary atomizer. The drying or cooling air enters the drying or cooling chamber via an air disperser positioned at or near the top of the chamber. For spray drying systems, further drying means may be provided in such drying system, for instance a fluidized bed.

In particular when atomizing the liquid into droplets by the use of nozzles, e.g. pressure nozzles or two-fluid nozzles, it is important that the nozzles do spray as intended, as otherwise a non-uniform process will be performed resulting in for example formation of deposits on the nozzle itself and on the wall inside of the chamber, and in the production of a product of less quality and a reduced capacity. As a consequence, lumps may occur in the product, and also, the risk of formation of deposits may lead to an exaggerated heating and in worst case fire in this deposit, as being in a heated zone for a longer time than anticipated.

It is desirable to ensure that leaks in nozzles in spray dryers or spray coolers that can disrupt the droplet dispersal within the chamber are detected, and to reduce the build-up of solid matter that can make the chamber overheat and, in extreme cases, may even cause fire and an explosion. Traditionally, fire or explosion detection and extinguishing or relieving devices are provided in such spray systems. Monitoring and surveillance of various processes are Known in the art. This monitoring is traditionally carried out in order to ascertain correct operational temperatures of for instance the output of an outlet such as a nozzle, or to ensure that the item to be sprayed has the correct temperature. EP 2 504 090 and US2012/287285 disclose such a temperature monitoring system comprising one or more infrared cameras adapted for measuring the temperature within a predefined area in a spray dryer system.

As the final product produced must be according to specifications as to quality and particle size, and as sources for starting fires and/or dust explosions in spray systems must be eliminated as far as possible for obvious reasons, the spraying process must be monitored. Monitoring systems using built-in visual TV cameras have been developed for which the TV cameras are used to give the operator an actual picture of the nozzle spraying performance. This means that an operator must watch a monitor all the time during processing. As many spray plants are running 24 hours a day for periods, a manual monitoring all the time is time consuming in terms of man-power. This is a disadvantage.

Thus, there is a need for an image analyzing system, which automatically detects changes in nozzle spraying performance and automatically issues warning or notifications when such changes are detected.

### SUMMARY

It is an object of the present invention to provide a monitoring method and system, which brings a solution to the problem of automatically issuing warning or notifications when changes in nozzle spraying performance appear.

The foregoing and other objects are achieved by the features of the independent claims. Further implementation forms are apparent from the dependent claims, the description and figures.

According to a first aspect, there is provided a method for monitoring deposit build-up on spray nozzles in a spray drying or spray cooling chamber, said method comprising:
feeding drying air or cooling air into the chamber;
feeding a feed material to be spray dried or spray cooled into the chamber through one or more spray nozzles, thereby obtaining one or more sprays of feed material in contact with drying or cooling air;
obtaining and recording a reference image by use of one or more digital optical cameras, said reference image having an image area comprising a first area of interest covering at least part of a spray nozzle and/or part of a feed material spray corresponding to a spray nozzle;
repetitively obtaining and recording process images by use of the one or more digital optical cameras, said process images covering the same image area as the reference image; and
comparing at least part of the recorded process images with the reference image and detecting differences within the first interest area between the reference image and each of a number of process images being compared to the reference image.

It is within an embodiment of the invention that a notification or an error notification may be issued based on the detected differences. It is within an embodiment of the invention that the notification or error notification is issued when a predetermined minimum difference is detected or determined for each of a predetermined number of recorded process images. Here, the predetermined number of recorded images may be obtained at different points in time. The predetermined number of recorded images may preferably be obtained at subsequent points in time or at consecutive points in time.

According to an embodiment of the first aspect, then the step of detecting differences within the first interest area between the reference image and each of a number of process images being compared to the reference image comprises:
detecting for the first interest area a pixel difference, if any, between similar addressed pixels within the reference image and each of a number of process images being compared to the reference image; and
determining for each or a part of the process images being compared to the reference image, a number of error pixels being the number of similar addressed pixels within the first area of interest for which a predetermined minimum pixel difference is detected.

According to an embodiment of the present invention, a process image, for which the determined number of error pixels within the same area of interest reaches or exceeds a predetermined minimum number of error pixels may be classified as an error image.

According to an embodiment of the present invention, a warning or notification may be issued based on one more process images being classified as error images with respect to the same image area of interest. It is also within an embodiment of the invention that a warning or notification may be issued based on a determined number of process images being classified as error images for the same image area of interest.

Thus, the issuance of a notification based on the detected differences may comprise:
issuing a notification when a predetermined minimum number of error pixels within the first area of interest is determined for each of a predetermined number of recorded process images. Also here, the predetermined number of recorded images may be obtained at different points in time, and the predetermined number of recorded images may preferably be obtained at subsequent points in time or at consecutive points in time.

It should be understood that the present invention covers embodiments for which the camera is a digital still image camera and embodiments for which the camera is a digital video camera taking a stream of images, where only a part of the streamed images are recorded and compared with the reference image.

It is within an embodiment of the invention that
the image area of the reference image comprises several areas of interest;
the detection of a difference between similar addressed pixels in the reference image and a process image is performed for at least two areas of interest;
a number of error pixels is determined for each of said at least two areas of interest for each or a part of the process images being compared to the reference image;
each of said at least two areas of interest has a corresponding predetermined minimum number of error pixels; and
a notification is issued when the determined number of error pixels reaches the corresponding predetermined minimum number of error pixels within at least one of the at least two areas of interest for each of a predetermined number of obtained process images. The predetermined number of obtained images may be obtained at different points in time, and the predetermined number of recorded images may preferably be obtained at subsequent points in time or at consecutive points in time.

It should be understood that the distance from a camera to different arranged spray nozzles will vary, thus the number of image pixels taken up in an image differs with the distance between the camera and the spray nozzle.

The present invention therefore also covers an embodiment, wherein
the image area of the recorded reference image further comprises a second area of interest, with the first area of interest covering parts of a first spray nozzle and the second area of interest covering parts of a second spray nozzle;
corresponding parts of the first nozzle and the second nozzle is larger in the reference image for the first nozzle than for the second nozzle; and
the corresponding predetermined minimum number of error pixels is larger for the first area of interest covering the first nozzle than for the second area of interest covering the second nozzle.

According to an embodiment of the invention the detection of a pixel difference between similar addressed pixels in the reference image and the process image is at least partly based on a difference in pixel intensity. It is preferred that the predetermined minimum pixel difference is defined as a minimum difference in pixel intensity between similar addressed pixels in the reference image and the process image. The minimum difference in pixel intensity may be set to at least 25%, such as at least 30%, such as at least 35%, or such as at least 39% of the maximum intensity when measuring the pixel intensity on a scale from 0% to 100%. The images may be represented as gray scale images when measuring the pixel intensity, and the pixel intensity may be given as a binary bit number, such as a 7 or 8-bit number, and the minimum difference in pixel intensity is set to a number representing a percentage of the maximum binary bit number corresponding to the predetermined minimum percentage difference in pixel intensity.

It is also within one or more embodiments of the invention that the detection of a pixel difference between similar addressed pixels in the reference image and the process image is at least partly based on a difference in pixel color. The images may be represented as RGB color images, and the predetermined minimum pixel difference may be defined as a minimum difference in pixel intensity of one of the RGB colors for similar addressed pixels in the reference image and the process image. The minimum difference in pixel intensity for one color may be set to at least 25%, such as at least 30%, such as at least 35%, or such as at least 39% of the maximum intensity when measuring the pixel intensity on a scale from 0% to 100%.

The present invention also covers one or more embodiments wherein for an image area of interest covering at least a part of a spray nozzle, the predetermined minimum number of error pixels for said area of interest of the reference image is determined based on the number of pixels representing a characteristic measure of the nozzle. Here, the characteristic measure of the nozzle may be the width of the nozzle. It is preferred that for an area of interest covering part of a spray nozzle the predetermined minimum number of error pixels is larger than the number of pixels representing the characteristic measure of the nozzle. The predetermined minimum number of error pixels may be at least 1,5 times larger, such as at least 2 times larger, such as at least 2,5 times larger, or such as at least 3 times larger than the number of pixels representing the characteristic measure of the nozzle.

According to an embodiment of the invention, the detection of a difference between the reference image and a process image is at least partly based on spectral analysis. Here, a frequency spectrum may be determined for both the reference image and the process image, and the obtained frequency spectra may be compared. A predetermined change in the number of detected frequencies and/or a predetermined change in the power spectrum may be defined as representing a predetermined minimum difference for a process image to be an error image. A notification may be issued when the predetermined minimum difference is determined for each of a predetermined number of recorded process images. The minimum difference in the number of detected frequencies may be set to just a single frequency.

The predetermined number of obtained and/or recorded process images may be selected within a wide range of numbers, depending on the spray nozzle setup. There are embodiments, wherein the predetermined number is at least one, such as at least two, such as at least three, such as at least five, or such as at least ten. However, it is preferred that it is in the range of 1 to 50, such as 1, 2, 3, 5, 10, 20, or 50.

It is within an embodiment of the invention that a single digital optical camera is used for obtaining the reference and process images. However, the invention also covers embodiments where several digital optical cameras are used, and where a reference image and corresponding process images are obtained for each camera. In a preferred embodiment 8 or up to 8 cameras are used, each covering a different angular view of an air inlet zone.

In order to provide sufficient light for obtaining images, it is preferred that a number of lamps providing light in the visible frequency spectrum is arranged in connection with or connected to at least one of the digital optical cameras. There are one or more embodiments for which the feed material is fed into the spray drying chamber through several spray nozzles, such as up to 28 nozzles. It is preferred that for at least one spray nozzle for which a part is covered by an area of interest, an output part for outputting a spray of feed material is covered by said area of interest.

It is within one or more embodiments of the present invention that the method comprises a pre-filtering step being performed on detected pixel differences within an area of interest for an obtained process image before determining the number of error pixels, said pre-filtering comprising filtering out detected pixel differences recognized as one or more predetermined shapes in the process image.

The pre-filtering may be a shape filtering whereby pixel differences due to error shapes which have no connection with deposit build-up may be filtered out in order not to generate false error images, where an error image is an image for which the detected number of error pixels has reached the predetermined minimum number of error pixels. The movement of a nozzle may result in pixel differences identified as a substantially rectangular shape in a process image when compared to the reference image, and these types of shapes may be accepted for the process images, and may therefore be filtered out in order not to generate error images. The size of the substantially rectangular shape may have a height close to the width of the nozzle width, and a width equal to the movement of the nozzle, which may be in the range of 10-30% of the nozzle width, such as about 20% of the nozzle width.

A light source may create a pixel difference between compared images, where the pixel difference can be identified as an elongated error shape due to a curved surface, and such error shapes may also be generalized as a substantially rectangular shape, and these types of shapes may be accepted for the process images, and may therefore be filtered out in the pre-filtering step in order not to generate error images. Shapes in pixel differences such as trapezoid or isosceles trapezoid may reflects the jet or spray and may also be accepted and filtered out in the pre-filtering step.

Thus, for the pre-filtering step it is preferred that the one or more predetermined shapes comprise a substantially rectangular shape and/or a trapezoid or isosceles trapezoid shape. Here, the predetermined shaped may be a substantially rectangular shape having a height substantially equal to the width of the nozzle width, and a width substantially equal to 10-30% of the nozzle width, such as about 20% of the nozzle width.

For the present invention it is preferred that a computer control system is provided, and that the computer control system is configured to control or perform the steps of image recording, image comparison, image difference detection and error notification according to any one of the above described embodiments of the method of the invention. The computer control system may also be configured to control the step of pre-filtering. Thus, it is within one or more embodiments of the invention that a computer control system is provided and configured to store or record images obtained by the digital camera(s), the computer control system further being configured to perform the steps of:
comparing at least part of the recorded process images with the reference image and detecting for the first interest area a pixel difference, if any, between similar addressed pixels within the reference image and each of a number of process images being compared to the reference image;
determining for each or a part of the process images being compared to the reference image, a number of error pixels being the number of similar addressed pixels within the first area of interest for which a predetermined minimum pixel difference is detected; and
issuing a notification when a predetermined minimum number of error pixels within the first area of interest is determined for each of a predetermined number of recorded process images. Also here, the predetermined number of recorded images may be obtained at different points in time, and the predetermined number of recorded images may preferably be obtained at subsequent points in time or at consecutive points in time.

According to the present invention there is also provided a spray dryer or spry cooling system comprising:
a spray drying or spray cooling chamber with an air inlet for feeding drying air or cooling air into the drying chamber;
one or more spray nozzles each having an output for feeding a feed material to be spray dried or spray cooled into the chamber;
one or more digital optical cameras being arranged for obtaining images having an image area comprising at least a first area of interest covering at least part of a spray nozzle and/or an area adjacent a spray nozzle output;
a computer control system configured to store or record images obtained by the digital camera(s) and compare images obtained by the same camera at different points in times, said control system further being configured to detect differences between compared images and to issue an error notification based on such detected differences.

It is preferred that the one or more cameras are configured for obtaining images in the visible frequency spectrum. It is also preferred that the system of the invention further comprises a number of light emitting lamps, which lamps may provide light in the visible frequency spectrum. The one or more lamps may be arranged for providing light to an area comprising a spray nozzle output. It is preferred that one or more lamps are arranged in connection with or connected to at least one of the digital optical cameras.

For the system it is preferred that the system comprises several spray nozzles each having an output for feeding a feed material to be spray dried or spray cooled into the chamber. The system may comprise a single digital optical camera being arranged for obtaining the images, but it also within an embodiment that several digital optical cameras are arranged for obtaining the images. Here, the cameras may cover different angular views.

It is within one or more embodiments of the system that the image area obtained by the one or more cameras comprises one or more areas of interest, whereby at least a part of each nozzle is covered by at least one area of interest. It is preferred that for at least one spray nozzle for which a part is covered by an area of interest, an output part for outputting a spray of feed material is covered by the area of interest.

The system also covers one or more embodiments wherein the computer control system is configured to control image recording, image comparison, image difference detection and error notitication as described in connection with any one of the methods of the present invention.

### BRIEF DESCRIPTION OF THE DRAWINGS

Fig. 1 is a schematic side view of a spray dryer system according to an embodiment of the invention;
Figs. 2a, 2b and 2c are schematic diagrams illustrating different arrangements of cameras and light emitting lamps according to embodiments of the invention;
Figs. 3a and 3b are schematic diagrams illustrating changes in spray nozzle performance resulting in a notification according to an embodiment of the invention;
Fig. 4 is a flow chart illustrating steps of monitoring deposit build-up on spray nozzles according to an embodiment of the invention; and
Fig. 5 is a flow chart illustrating steps of detecting differences in images obtained during a spray drying or spray cooling process according to an embodiment of the invention.

### DETAILED DESCRIPTION OF EMBODIMENTS OF THE PRESENT INVENTION

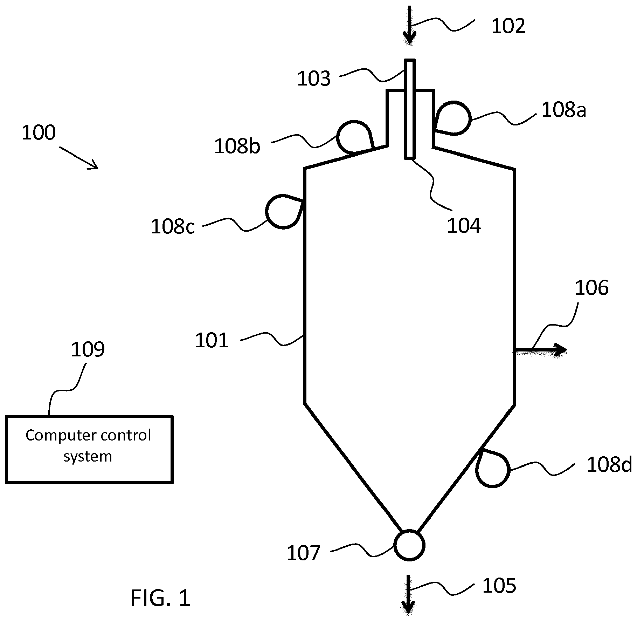

Fig. 1 is a schematic side view of a spray dryer system 100 according to an embodiment of the invention. The system 100 comprises a spray drying chamber 101 with an air inlet for feeding drying air 102 into the drying chamber 101, and with atomizing means in the form of a lance 103 with a spray nozzle 104 at an end thereof, where the spray nozzle 104 has an output for feeding a feed material to be spray dried into the spray drying chamber 101. The chamber 101 may have an air output 106 for outputting the drying air, and an output valve or rotary valve 107 for outputting the spray dried material 105 from the chamber 101.

The system 100 of Fig. 1 is a spray dryer system. However, the present invention also covers monitoring of one or more spray nozzles of a spray cooling system. Such spray cooling system may comprise similar components as the spray dryer system 100 of Fig. 1, and using the reference numbers of the system 100 of Fig. 1, then for a spray cooling system 100 the spray nozzle or nozzles 104 are arranged in a spray cooling chamber 101, and one or more air inlets are provided for feeding cooling air 102 into the cooling chamber 101. For a spray cooling system, the cooling chamber 101 may also have an air output 106 for outputting the cooling air, and an output valve 107 for outputting the spray cooled material 105 from the chamber 101. In the following the reference system 100 may refer to both a spray dryer system and a spray cooling system.

The system 100 further comprises a number of digital optical cameras 108a,b,c,d for obtaining images in the visible frequency spectrum, and arranged at different positions in connection with the chamber 101. Each camera 108a,b,c,d is arranged with a visual view for obtaining images having an image area comprising at least a first image area of interest covering a part of the spray nozzle 104. It is preferred that the first image area covers the spray nozzle output 104 and an area adjacent the spray nozzle output 104. However, it is also within embodiments of the invention that one or more of the cameras 108a,b,c,d have an image area with a first image area of interest not covering the spray nozzle but covering the area adjacent the spray nozzle output 104.

The chamber 101 may also be provided with several spray nozzles 104, which each may be arranged at the end of a rod or lance 103. When having several spray nozzles 104, it is preferred that at least a part of each spray nozzle 104, such as the output of the spray nozzle 104, is covered by one or more image areas of interest within the image area obtained by at least one camera. It is within a preferred embodiment of the invention that at least a part of each spray nozzle 104 is covered by an image area of interest within the image area covered by images obtained by one camera. According to an embodiment of the invention, the chamber 101 may be provided with up to 28 spray nozzles or even more if needed.

It is preferred that all nozzles 104 in the system 100 are of known size, and that all nozzles 104 have the same size. The spray nozzles 104 may move during operation due to air impact, and the nozzles 104 may move approximately 0-30% of the diameter of the nozzle lance 103.

In order to optimize monitoring of the performance of the spray nozzles 104, it is preferred that the system 100 is provided with several cameras 108a,b,c,d. These cameras 108a,b,c,d may then be arranged to cover different angular views of the spray nozzles 104. It is preferred that for at least one spray nozzle 104, the cameras 108a,b,c,d are arranged so as in combination to cover a full viewing angle of 360° of the nozzle 104.

The system 100 of Fig. 1 is provided with four cameras 108a,b,c,d arranged at different positions in connection with the chamber 101 and with different angular views of the spray nozzle. However, it is within embodiments of the present invention that there is only provided one camera 108a, and the invention also cover embodiments having eight cameras 108 or more, if needed, arranged at different positions and with different angular views of the spray nozzle(s) 104.

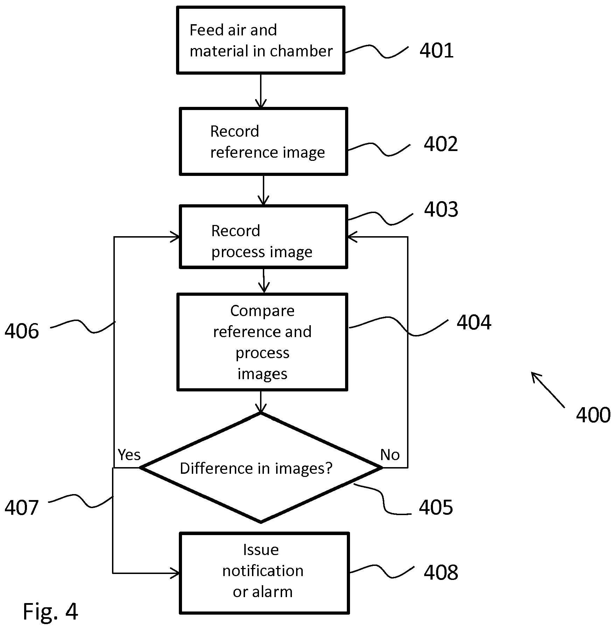

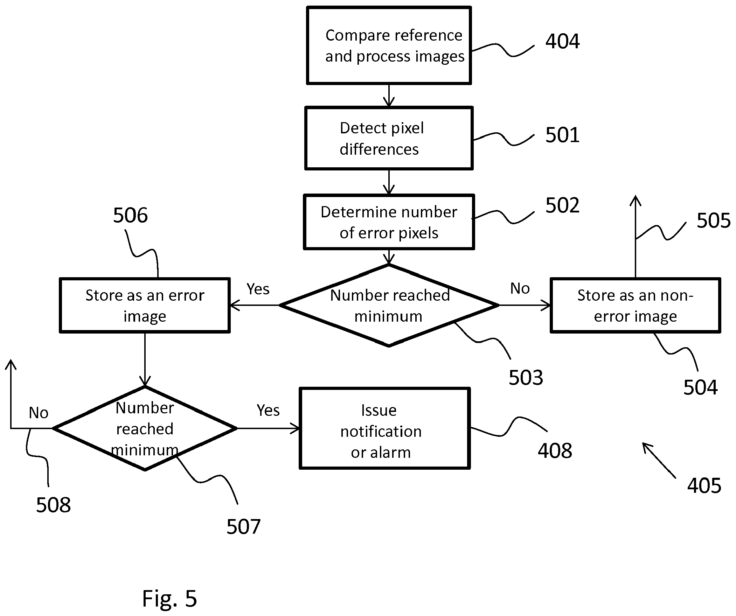

The system 100 further comprises a computer control system 109, which is configured to store or record the images obtained by the digital cameras 108a,b,c,d. The computer system 109 is further configured to compare images obtained by the same camera 108a at different points in times, and to detect differences between the compared images and issue a notification based on such detected differences. The computer system 109 may be configured to control image recording, image comparison, image difference detection and notification as described in connection with the flow charts of Figs. 4 and 5.

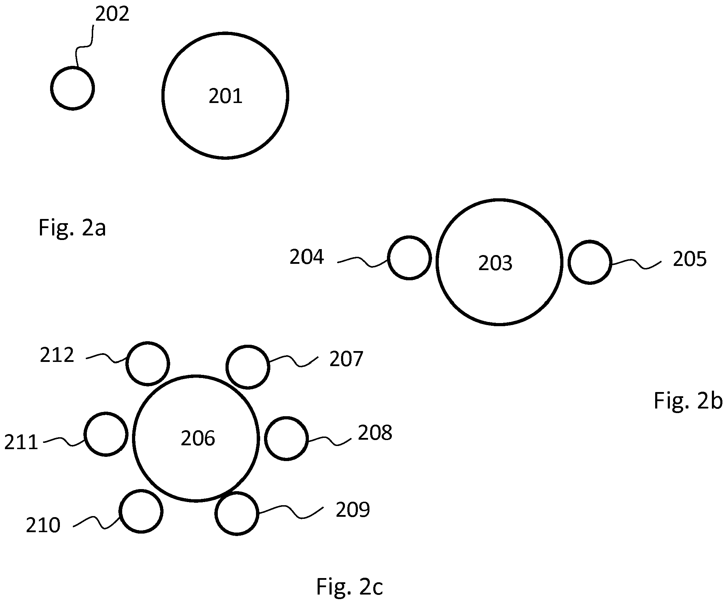

In order for the cameras 108a,b,c,d to obtain images of a useful quality, there should be sufficient light on the objects for which the images are obtained. For the system 100 the objects are the spray nozzle(s) 104. Although not shown in Fig. 1, it is therefore preferred that one or more light arrangements are provided in connection with the chamber 101 in order to provide light in the visible frequency spectrum. The lighting arrangement(s) may be arranged so as to direct light towards the one or more spray nozzles 104 within the chamber 101. It is preferred that light arrangements being one or more light emitting lamps are arranged close to or connected to a camera 108, so as to direct light in the same direction as the angular view of the camera, and preferably so as to cover at least the angular view of the camera 108. This is illustrated in Figs. 2a, 2b and 2c, which show different arrangements of cameras and light emitting lamps according to embodiments of the invention.

Fig. 2a shows a camera 201 with a single lamp 202 arranged at a distance to and not connected to the camera 201. However, the lamp 202 shall be arranged so as to direct light in the same direction as the angular view of the camera 201. Fig. 2b shows a camera 203 with two lamps 204, 205 arranged in connection with the camera 203, and with both lamps being arranged so as to direct light in the same direction as the angular view of the camera 203. Fig. 2c shows a camera 206 with six lamps 207, 208, 209, 210, 211, 212 arranged in connection with the camera 206, and with all lamps being arranged so as to direct light in the same direction as the angular view of the camera 206.

The cameras 108a,b,c,d may be mounted outside the chamber 101, and windows may be provided in the chamber 101 for allowing images to be obtained and for allowing light into the chamber 101. However, it is also within embodiments that openings are provided in the chamber 101 for receiving a camera 108, 201, 203, 206 and lamps 202, 204, 205, 207-212 connected to the camera 201, 203, 206. The camera and lamps may be mounted in a house, which may be provided with a window, where the camera housing may fit to an opening of the chamber 101. The camera house may be mounted on a flange, in order to be detachable connected to the chamber 101. Cleaning of the windows may be performed by use of Cleaning in Place, CIP.

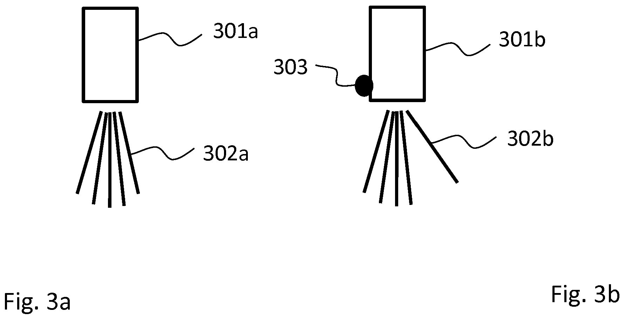

A change in the performance of a spray nozzle will occur when deposit is build-up on the spray nozzle during operation, and a warning or notification should be issued when such a deposit build-up is detected. Figs. 3a and 3b are schematic diagrams illustrating a change in spray nozzle performance due to deposit build-up. Fig. 3a shows schematically an image of a normal spray nozzle 301a with a normal jet or spray output 302a of feed material, while Fig. 3b shows a spray nozzle 301b with a deposit build-up 303 close to the output of the nozzle 301b. The deposit build-up 303 results in a non-uniform jet or spray output 302b of feed material, which again may result in a degradation of the final spray dried product. Thus, for the spray nozzle 301b a warning or notification shall be issued, both due to the danger of exaggerated heating caused by the deposit build-up itself 303 and due to the change in the jet or spray output 302b.

Methods according to one or more embodiments of the present invention for monitoring deposit build-up 303 on spray nozzles 301b in a spray drying or spray cooling chamber 101 will be described in the following. The methods may be used when performing a spray drying or spray cooling process using the system 100 as described here above.

Fig. 4 is a flow chart illustrating steps of an example embodiment according to the invention of a method 400 for monitoring deposit build-up on spray nozzles in a spray drying chamber or spray cooling chamber, such a chamber 101 of the system 100. The method 400 comprises a feeding step 401 of feeding drying or cooling air into the chamber, and feeding a feed material to be spray dried or spray cooled into the chamber through one or more spray nozzles, thereby obtaining one or more jets or sprays of feed material in contact with drying or cooling air. This is followed by a reference image recording step 402, of obtaining and recording a reference image by use of one or more digital optical cameras, where the reference image has an image area comprising a first area of interest covering at least part of a spray nozzle and/or part of a feed material jet or spray corresponding to a spray nozzle.

Step 402 is followed by a step 403 of process image recording. Here, one or more process images are repetitively obtained and recorded by use of the one or more digital optical cameras, where each process image covers the same image area as a corresponding reference image. If several cameras are used, then a reference image is obtained for each camera in step 402, and process images are also obtained for each camera in step 403, whereby process images obtained by a camera have a corresponding reference image. When a process image has been recorded in step 403, the next step is a step of image comparison, step 404, in which the obtained process image is compared to its reference image.

Step 404 is followed by a step of image difference detection, step 405. Step 405 is illustrated in further details if Fig. 5, which starts with the image comparison of step 404. Step 405 comprises detecting for the first interest area if there is a pixel difference between similar addressed pixels within the reference image and the process image, step 501. This is followed by determining a number of error pixels for the process image, step 502, where the number of error pixels is the number of similar addressed pixels within the first area of interest for which a predetermined minimum pixel difference is detected. Step 502 is followed by determining if the number of error pixels reaches a predetermined minimum number or error pixels, step 503. If the minimum number of error pixels is not reached, then the process image may be stored as a non-error image, step 504, which is optional, and the process returns as indicated by arrow 505 to step 403, where a next process image is recorded and subjected to the image comparison of step 404 followed by the difference detection of step 405.

If in step 503 the minimum number of error pixels is reached, then the process image is stored as an error image, step 506, and it is determined in step 507 if the number of stored error images has reached a predetermined minimum number of error images, and if not, the process returns to step 403, as indicated by arrows 508 and 406. At step 403 a next process image is recorded and subjected to the image comparison of step 404 followed by the difference detection of step 405. If a first error image has been recorded and stored, then there is a great possibility that the following obtained process images with the same reference image will be stored as error images, and when in step 507 it is determined that the number of error images has reached the predetermined minimum number of error images, a warning or notification is issued, step 408, as indicated by arrow 407 of Fig. 4. Here the process may be stopped, but if not being stopped, the process may return to step 403. When comparing the number of process error images having the same reference image, it is preferred that it is a number of subsequently or consecutively obtained error images, which shall reach the predetermined minimum number of error images in order for a warning or notification to be issued.

Although in step 404 it is preferred to compare all recorded process images with a reference image, it is also within embodiments of the methods of the present invention that only part of the obtained process images are compared with the reference image. Also for step 405 it is preferred that a number of error pixels is determined for each process image being compared to a reference image, but it is within embodiments of the methods of the present invention that the number or error pixels is only determined for a part of the process images being compared with the reference image.

When in step 408 a warning or notification is issued, action may be taken by the operators running the spray drying or spray cooling process. The action may be to have a look at the spray nozzles to see, if any of the nozzles need to be cleaned and if so, then the nozzles are cleaned. If there is no need for cleaning a nozzle, then the monitoring process may be initialized and a new reference image may be recorded before proceeding with the process.

The type of warning or notification is optional, but may be visual, audible or numerical in order to notify the operators. The type of notification may be an error notification.

The distance from a camera to different arranged spray nozzles will vary, and the number of image pixels taken up in an image may differ with the distance between the camera and the spray nozzle.

The method of the invention therefore covers embodiments, for which the image area of the recoded reference image comprises several areas of interest. Here, the detection in step 501 of a difference between similar addressed pixels in the reference image and a process image is performed for at least two areas of or for all defined areas of interest, and for step 502 a number of error pixels is determined for each of these at least two areas of interest for the process images being compared to the reference image. It is noticed that each of said at least two areas of interest has a corresponding predetermined minimum number of error pixels, where the minimum number of error pixels may differ between the defined image areas of interest. A warning or notification is issued when the determined number of error pixels reaches the corresponding predetermined minimum number of error pixels within at least one of the at least two areas of interest for each of the predetermined number of obtained process images, where the predetermined number of obtained images may be obtained at different points in time, and preferably obtained at subsequent points in time or at consecutive points in time.

Thus, the method of the invention also covers an embodiment, for which the image area of the recorded reference image, step 402, comprises both a first and a second area of interest, with the first area of interest covering parts of a first spray nozzle and the second area of interest covering parts of a second spray nozzle. Here, corresponding parts of the first nozzle and the second nozzle may be larger in the reference image for the first nozzle than for the second nozzle, and the corresponding predetermined minimum number of error pixels may be larger for the first area of interest covering the first nozzle than for the second area of interest covering the second nozzle.

It is within one or more embodiments of the invention that for an image area of interest covering at least a part of a spray nozzle, the predetermined minimum number of error pixels for this area of interest of the reference image is determined based on the number of pixels representing a characteristic measure of the nozzle, where the characteristic measure of the nozzle may be the width of the nozzle. It is preferred that for an area of interest covering part of a spray nozzle the predetermined minimum number of error pixels is larger than the number of pixels representing the characteristic measure of the nozzle. The predetermined minimum number of error pixels may differ depending on the number of pixels representing the characteristic measure of the nozzle, and may decrease with an increasing number of pixels representing the characteristic measure of the nozzle. The predetermined minimum number of error pixels may be at least 1,5 times larger, such as at least 2 times larger, such as at least 2,5 times larger, or such as at least 3 times larger than the number of pixels representing the characteristic measure of the nozzle.

The present invention covers embodiments, for which the detection of a pixel difference between similar addressed pixels in the reference image and a corresponding process image is at least partly based on a difference in pixel intensity. Thus, the predetermined minimum pixel difference may be defined as a minimum difference in pixel intensity between similar addressed pixels in the reference image and the process image. The predetermined minimum difference in pixel intensity may be set to at least 25%, such as at least 30%, such as at least 35%, or such as at least 39%.

The detection of pixel differences may be based on gray scale images, where the pixel intensity may be given as a binary bit number, such as a 7 or 8-bit number, and the minimum difference in pixel intensity may be set to a number representing a percentage of the maximum binary bit number corresponding to the predetermined minimum percentage difference in pixel intensity.

The present invention also covers embodiments, for which the detection of a pixel difference between similar addressed pixels in the reference image and the process image is at least partly based on a difference in pixel color. Here, the images may be RGB color images, and the predetermined minimum pixel difference may be defined as a minimum difference in pixel intensity of one of the RGB colors for similar addressed pixels in the reference image and the process image. The predetermined minimum difference in pixel intensity for one color may be set to at least 25%, such as at least 30%, such as at least 35%, or such as at least 39%.

It is noticed that a filtering or kind of noise filtering may be obtained when selecting the predetermined minimum number for the obtained error images and the predetermined minimum number of error pixels. A low value may be determined for the number of error images and a high value may be determined for the number of error pixels, or a high value may be determined for the number of error images and a low value may be determined for the number of error pixels. Also, relatively low values or relatively high values may be determined for both numbers.

The present invention also covers embodiments, for which the detection of a difference within an interest area between the reference image and the process image is at least partly based on spectral analysis. Here, a frequency spectrum may be determined for both the reference image and the process image, and the obtained frequency spectra may be compared. The frequency spectra may be obtained by use of Discrete Fourier Transform, DFT, for transforming the digital images from the spatial domain to the frequency domain. A predetermined change in the number of detected frequencies and/or a predetermined change in the power spectrum may be defined as representing a predetermined minimum difference for a process image to be an error image. A notification may be issued when the predetermined minimum difference is detected for each of a predetermined number of recorded process images. The minimum difference in the number of detected frequencies may be set to just one frequency.

It is within embodiments of the invention that the predetermined minimum number for the obtained error images has a value of just 1. But the number may be selected within - but not restricted to - the range from 1-50, or 1-100, such as 10, 20, 50 or 75.

The present invention covers embodiments, for which the predetermined minimum number of error pixels for an area of interest of the reference image is selected within the range of 1-1000 pixels, such as in the range of 50-500 pixels, or such as in the range of 50-200 pixels.

The one or more digital optical cameras used for obtaining the reference and process images may be digital still image cameras. The one or more cameras may also or alternatively be digital video cameras taking a stream of images, where all or only a part of the streamed images may recorded and compared with a reference image. The one or more cameras may be configured to obtain images comprising at least 2 MegaPixels, but the obtained images may comprise a smaller number of pixels, depending on the use of zooming in on the spray nozzles.

It is noted that when several digital optical cameras are used, then a reference image and corresponding process images should be obtained for each camera.

It is preferred that the minimum number of error pixels and the minimum number of error images are selected so that at least some deviations in the process image due to nozzle movement is accepted.

It is within one or more embodiments of the present invention that the method comprises a pre-filtering step being performed on detected pixel differences within an area of interest for an obtained process image before determining the number of error pixels. The pre-filtering may be a shape filtering whereby pixel differences due to error shapes which have no connection with deposit build-up may be filtered out in order not to generate false error images, where an error image is an image for which the detected number of error pixels has reached the predetermined minimum number of error pixels. The movement of a nozzle may result in pixel differences identified as a substantially rectangular shape in a process image when compared to the reference image, and these types of shapes may be accepted for the process images, and may therefore be filtered out in order not to generate error images. The size of the substantially rectangular shape may have a height close to the width of the nozzle width, and a width equal to the movement of the nozzle, which may be in the range of 10-30% of the nozzle width, such as about 20% of the nozzle width.

A light source may create a pixel difference between compared images, where the pixel difference can be identified as an elongated error shape due to a curved surface, and such error shapes may also be generalized as a substantially rectangular shape, and these types of shapes may be accepted for the process images, and may therefore be filtered out in the pre-filtering step in order not to generate error images. Shapes in pixel differences such as trapezoid or isosceles trapezoid may reflects the jet or spray and may also be accepted and filtered out in the pre-filtering step.

For simple system setups with a low number of spray nozzles, a reference image may be locked to a specific spray nozzle and set to follow movement of this nozzle, whereby errors may not be detected due to nozzle movement. Recognition of nozzle movement may be based on recognition of shape or contrast, and techniques such as morphology may be applied if needed.

For simple system setups with a low number of spray nozzles, e.g. where nozzles are not overlapping and contrast exists between nozzle and background, an auto detection of nozzles within the obtained images may be used based on recognition of nozzles as shapes or contrast objects. Auto detection of nozzles may be manually assisted, or solely from overlapping an image from e.g. CAD on which the nozzles are identified. Definition or identification of spray nozzles in each image area of interest can be obtained from user inputs or from automatic detection and may be logged for retrieval during error reporting. Individual nozzle identification may be assisted by marking of nozzles with color, bar code or other markings.

The term "comprising" as used in the appended claims does not exclude other elements or steps. The term "a" or "an" as used in the appended claims does not exclude a plurality.

## Claims

1. A method (400) for monitoring deposit build-up on spray nozzles (104, 301a,b) in a spray drying or spray cooling chamber (101), said method comprising:
feeding (401) drying air (102) or cooling air into the chamber (101);
feeding (401) a feed material to be spray dried or spray cooled into the chamber (101) through one or more spray nozzles (104, 301a, 301b), thereby obtaining one or more sprays of feed material in contact with drying or cooling air; and
obtaining (402, 403) and recording images by use of one or more digital optical cameras (108a, 108b, 108c, 108d, 201, 203, 206), said images having an image area comprising a first area of interest covering at least part of a spray nozzle (104, 301a, 301b) and/or part of a feed material spray corresponding to a spray nozzle;
said method being **characterised in that**:
the step of obtaining and recording images (402, 403) comprises obtaining (402) and recording a reference image by use of the one or more digital optical cameras (108a, 108b, 108c, 108d, 201, 203, 206), said reference image having an image area comprising the first area of interest; and
repetitively obtaining (403) and recording process images by use of the one or more digital optical cameras (108a, 108b, 108c, 108d, 201, 203, 206), said process images covering the same image area as the reference image;
and **in that** the method comprises:
comparing (404) at least part of the recorded process images with the reference image and detecting (405, 501) differences within the first interest area between the reference image and each of a number of process images being compared to the reference image; and
issuing (408) a notification based on the detected differences.

2. A method according to claim 1, wherein a notification is issued (408) when a predetermined minimum difference is detected (507) for each of a predetermined number of recorded process images.

3. A method according to claim 1 or 2, wherein the step of detecting (405, 501) differences within the first interest area between the reference image and each of a number of process images being compared to the reference image comprises:
detecting (405, 501) for the first interest area a pixel difference, if any, between similar addressed pixels within the reference image and each of a number of process images being compared to the reference image; and
determining (502, 503) for each or a part of the process images being compared to the reference image, a number of error pixels being the number of similar addressed pixels within the first area of interest for which a predetermined minimum pixel difference is detected; and wherein the step of issuing (408) a notification based on the detected differences comprises:
issuing (408) a notification when a predetermined minimum number of error pixels within the first area of interest is determined (507) for each of a predetermined number of recorded process images.

4. A method according to claim 3, wherein:
the image area of the reference image comprises several areas of interest;
the detection (501) of a difference between similar addressed pixels in the reference image and a process image is performed for at least two areas of interest;
a number of error pixels is determined (502) for each of said at least two areas of interest for each or a part of the process images being compared to the reference image;
each of said at least two areas of interest has a corresponding predetermined minimum number of error pixels; and
a notification (408) is issued when the determined number of error pixels reaches the corresponding predetermined minimum number of error pixels (503) within at least one of the at least two areas of interest for each of a predetermined number (507) of obtained process images.

5. A method according to claim 4, wherein:
the image area of the recorded reference image further comprises a second area of interest, with the first area of interest covering parts of a first spray nozzle (104, 301a, 301b) and the second area of interest covering parts of a second spray nozzle (104, 301a, 301b);
corresponding parts of the first nozzle and the second nozzle is larger in the reference image for the first nozzle than for the second nozzle; and
the corresponding predetermined minimum number of error pixels (503) is larger for the first area of interest covering the first nozzle than for the second area of interest covering the second nozzle.

6. A method according to any one of the claims 3 to 5, wherein the detection (501) of a pixel difference between similar addressed pixels in the reference image and the process image is at least partly based on a difference in pixel intensity, and wherein the predetermined minimum pixel difference is defined as a minimum difference in pixel intensity between similar addressed pixels in the reference image and the process image.

7. A method according to claims 6, wherein the minimum difference in pixel intensity is set to at least 25%, such as at least 30%, such as at least 35%, or such as at least 39%.

8. A method according to any one of the claims 3 to 7, wherein for an image area of interest covering at least a part of a spray nozzle, the predetermined minimum number of error pixels (503) for said area of interest of the reference image is determined based on the number of pixels representing a characteristic measure of the nozzle (104, 301a, 301b).

9. A method according to claim 8, wherein for said area of interest covering part of a spray nozzle the predetermined minimum number of error pixels (503) is larger than the number of pixels representing the characteristic measure of the nozzle (104, 301a, 301b).

10. A method according to claim 9, wherein the predetermined minimum number of error pixels (503) is at least 1,5 times larger, such as at least 2 times larger, such as at least 2,5 times larger, or such as at least 3 times larger than the number of pixels representing the characteristic measure of the nozzle (104, 301a, 301b).

11. A method according to any one of the claims 3 to 10, further comprising a pre-filtering step being performed on detected pixel differences within an area of interest for an obtained process image before determining the number of error pixels, said pre-filtering comprising filtering out detected pixel differences recognized as one or more predetermined shapes in the process image, wherein said one or more predetermined shapes comprises a substantially rectangular shape and/or a trapezoid or isosceles trapezoid shape.

12. A method according to any one of the claims 1 to 11, wherein a computer control system (109) is provided and configured to store or record images obtained by the digital camera(s) (108a, 108b, 108c, 108d, 201, 203, 206, the computer control system (109) further being configured to perform the steps of:
comparing (404,) at least part of the recorded process images with the reference image and detecting (405, 501) for the first interest area a pixel difference, if any, between similar addressed pixels within the reference image and each of a number of process images being compared to the reference image;
determining (502, 503) for each or a part of the process images being compared to the reference image, a number of error pixels being the number of similar addressed pixels within the first area of interest for which a predetermined minimum pixel difference is detected; and
issuing (408) a notification when a predetermined minimum number of error pixels within the first area of interest is determined (507) for each of a predetermined number of recorded process images.

13. A spray dryer or spray cooling system (100) comprising:
a spray drying or spray cooling chamber (101) with an air inlet for feeding drying air (102) or cooling air into the drying chamber (101);
one or more spray nozzles (104, 301a, 301b) each having an output for feeding a feed material to be spray dried or spray cooled into the chamber (101); and
one or more digital optical cameras (108a, 108b, 108c, 108d, 201, 203, 206) being arranged for obtaining images having an image area comprising at least a first area of interest covering at least part of a spray nozzle (104, 301a,b) and/or an area adjacent a spray nozzle output;
**characterised in that** the cooling system (100) further comprises:
a computer control system (109) configured to store or record images obtained by the digital camera(s) (108a, 108b, 108c, 108d, 201, 203, 206) and compare images obtained by the same camera at different points in times, said control system (109) further being configured to detect differences between compared images and to issue an error notification based on such detected differences.

14. A system according to claim 13, wherein the one or more cameras (108a, 108b, 108c, 108d, 201, 203, 206) are configured for obtaining images in the visible frequency spectrum.

15. A system according to claim 13 or 14, wherein the system (100) further comprises a number of light emitting lamps (202, 204, 205, 207, 208, 209, 210, 211, 212) for providing light in the visible frequency spectrum.

## Patentansprüche

1. Verfahren (400) zur Überwachung von Ablagerungen auf Sprühdüsen (104, 301a, b) in einer Sprühtrocknungs- oder Sprühkühlkammer (101), das Verfahren umfassend:
Zuführen (401) von Trocknungsluft (102) oder von Kühlluft in die Kammer (101);
Zuführen (401) eines Einsatzmaterials, das sprühgetrocknet oder sprühgekühlt werden soll, in die Kammer (101) durch eine oder mehrere Sprühdüsen (104, 301a, 301b), wobei ein oder mehrere Sprühstrahlen von Einsatzmaterial in Kontakt mit Trocknungs- oder Kühlluft erhalten werden; und
Erhalten (402, 403) und Aufzeichnen von Bildern durch Verwendung von einer oder mehreren optischen Digitalkameras (108a, 108b, 108c, 108d, 201, 203, 206), wobei die Bilder einen Bildbereich aufweisen, die einen ersten Interessenbereich umfassen, der zumindest einen Teil einer Sprühdüse (104, 301a, 301b) und/oder einen Teil eines Einsatzmaterial-Sprühstrahls, der einer Sprühdüse entspricht, abdeckt;
wobei das Verfahren **dadurch gekennzeichnet ist, dass**:
der Schritt des Erhaltens und Aufzeichnens der Bilder (402, 403) das Erhalten (402) und Aufzeichnen eines Referenzbildes unter Verwendung der einen oder der mehreren optischen Digitalkameras (108a, 108b, 108c, 108d, 201, 203, 206) umfasst, wobei das Referenzbild einen Bildbereich aufweist, der den ersten Interessenbereich umfasst; und
wiederholtes Erhalten (403) und Aufzeichnen von Prozessbildern durch die Verwendung der einen oder der mehreren optischen Digitalkameras (108a, 108b, 108c, 108d, 201, 203, 206) umfasst, wobei die Prozessbilder den gleichen Bildbereich wie das Referenzbild abdecken;
und dadurch, dass das Verfahren umfasst:
Vergleichen (404) mindestens eines Teils der aufgezeichneten Prozessbilder mit dem Referenzbild und Erfassen (405, 501) von Unterschieden innerhalb des ersten Interessenbereichs zwischen dem Referenzbild und jedem einer Anzahl von Prozessbildern, die mit dem Referenzbild verglichen werden; und
Ausgeben (408) einer Benachrichtigung auf der Grundlage der erfassten Unterschiede.

2. Verfahren nach Anspruch 1, wobei eine Benachrichtigung ausgegeben wird (408), wenn ein vorbestimmter minimaler Unterschied für jede einer vorbestimmten Anzahl aufgezeichneter Prozessbilder erfasst (507) wird.

3. Verfahren nach Anspruch 1, oder 2, wobei der Schritt des Erfassens (405, 501) von Unterschieden innerhalb des ersten Interessenbereichs zwischen dem Referenzbild und jedem einer Anzahl von Prozessbildern, die mit dem Referenzbild verglichen werden, umfasst:
Erfassen (405, 501) für den ersten Interessenbereich eines Pixel-Unterschieds, falls vorhanden, zwischen ähnlichen adressierten Pixeln innerhalb des Referenzbildes und jedem einer Anzahl von Prozessbildern, die mit dem Referenzbild verglichen werden; und
Bestimmen (502, 503) für jeden oder einen Teil der Prozessbilder, der/die mit dem Referenzbild verglichen wird/werden, einer Anzahl von Fehlerpixeln, wobei die Anzahl von ähnlichen adressierten Pixeln innerhalb des ersten Interessenbereichs ist, für die ein vorbestimmter minimaler Pixel-Unterschied erfasst wird; und wobei der Schritt des Ausgebens (408) einer Benachrichtigung auf der Grundlage der erfassten Unterschiede umfasst:
Ausgeben (408) einer Benachrichtigung, wenn eine vorbestimmte Mindestanzahl von Fehlerpixeln in dem ersten Interessenbereich für jeden einer vorbestimmten Anzahl aufgezeichneter Prozessbilder bestimmt (507) wird.

4. Verfahren nach Anspruch 3, wobei:
der Bildbereich des Referenzbildes mehrere Interessenbereiche umfasst;
die Erfassung (501) eines Unterschieds zwischen ähnlichen adressierten Pixeln in dem Referenzbild und einem Prozessbild für mindestens zwei Interessenbereiche ausgeführt wird;
eine Anzahl von Fehlerpixeln für jeden der mindestens zwei Interessenbereiche für jeden oder einen Teil der Prozessbilder, der/die mit dem Referenzbild verglichen wird/werden, bestimmt (502) wird;
jeder der mindestens zwei Interessenbereiche eine entsprechende vorbestimmte Mindestanzahl von Fehlerpixeln aufweist; und
eine Benachrichtigung (408) ausgegeben wird, wenn die bestimmte Anzahl von Fehlerpixeln die entsprechende vorgegebene Mindestanzahl von Fehlerpixeln (503) innerhalb von mindestens einem der mindestens zwei Interessenbereiche für jeden einer vorbestimmten Anzahl (507) erhaltener Bilder erreicht.

5. Verfahren nach Anspruch 4, wobei:
der Bildbereich des aufgezeichneten Referenzbildes ferner einen zweiten Interessenbereich umfasst, wobei der erste Interessenbereich Teile einer ersten Sprühdüse (104, 301a, 301b) und der zweite Interessenbereich Teile einer zweiten Sprühdüse (104, 301a, 301b) abdeckt;
entsprechende Teile der ersten Düse und der zweiten Düse in dem Referenzbild für die erste Düse größer sind als für die zweite Düse; und
die entsprechende vorbestimmte Mindestanzahl von Fehlerpixeln (503) für den ersten Interessenbereich, der die erste Düse abdeckt, größer ist als für den zweiten Interessenbereich, der die zweite Düse abdeckt.

6. Verfahren nach einem der Ansprüche 3 bis 5, wobei die Erfassung (501) eines Pixel-Unterschieds zwischen ähnlichen adressierten Pixeln in dem Referenzbild und dem Prozessbild mindestens teilweise auf einem Unterschied der Pixelintensität basiert, und wobei der vorbestimmte minimale Pixel-Unterschied als ein minimaler Unterschied der Pixelintensität zwischen ähnlichen adressierten Pixeln im Referenzbild und dem Prozessbild definiert ist.

7. Verfahren nach Anspruch 6, wobei der minimale Unterschied in der Pixelintensität auf mindestens 25 %, sowie mindestens 30 %, sowie mindestens 35 % oder sowie mindestens 39 % eingestellt wird.

8. Verfahren nach einem der Ansprüche 3 bis 7, wobei für einen Interessenbildbereich, der mindestens einen Teil einer Sprühdüse abdeckt, die vorbestimmte Mindestanzahl von Fehlerpixeln (503) für den Interessenbereich des Referenzbildes basierend auf der Anzahl der Pixel, die ein charakteristisches Maß der Düse darstellen (104, 301a, 301b), bestimmt wird.

9. Verfahren nach Anspruch 8, wobei für den Interessenbereich, der einen Teil einer Sprühdüse abdeckt, die vorbestimmte Mindestanzahl von Fehlerpixeln (503) größer als die Anzahl von Pixeln ist, die das charakteristische Maß der Düse (104, 301a, 301b) darstellen.

10. Verfahren nach Anspruch 9, wobei die vorbestimmte Mindestanzahl von Fehlerpixeln (503) mindestens 1,5-mal größer, sowie mindestens 2-mal größer, sowie mindestens 2,5-mal größer oder sowie mindestens 3-mal größer als die Anzahl von Pixeln ist, die das charakteristische Maß der Düse (104, 301a, 301b) darstellen.

11. Verfahren nach einem der Ansprüche 3 bis 10, ferner umfassend einen Vorfilterungsschritt, der auf erfasste Pixel-Unterschiede innerhalb eines Interessenbereichs für ein erhaltenes Prozessbild ausgeführt wird, bevor die Anzahl der Fehlerpixel bestimmt wird, wobei das Vorfiltern das Herausfiltern erfasster Pixel-Unterschiede umfasst, die als eine oder mehrere vorbestimmte Formen in dem Prozessbild erkannt werden, wobei die eine oder mehreren vorbestimmten Formen eine im Wesentlichen rechteckige Form und/oder eine trapezförmige oder gleichschenklige trapezförmige Form aufweisen.

12. Verfahren nach einem der Ansprüche 1 bis 11, wobei ein Computersteuersystem (109) bereitgestellt und konfiguriert ist, um Bilder zu speichern oder aufzuzeichnen, die durch die Digitalkamera(s) (108a, 108b, 108c, 108d, 201, 203, 206) erhalten werden, wobei das Computersteuersystem (109) ferner konfiguriert ist, um die folgenden Schritte auszuführen:
Vergleichen (404) von mindestens einem Teil der aufgezeichneten Prozessbilder mit dem Referenzbild und Erfassen (405, 501) von Unterschieden innerhalb des ersten Interessenbereichs zwischen dem Referenzbild und jedem einer Anzahl von Prozessbildern, die mit dem Referenzbild verglichen werden;
Bestimmen (502, 503) für jeden oder einen Teil der Prozessbilder, der/die mit dem Referenzbild verglichen wird/werden, einer Anzahl von Fehlerpixeln, wobei die Anzahl von ähnlichen adressierten Pixeln innerhalb des ersten Interessenbereichs ist, für die ein vorbestimmter minimaler Pixel-Unterschied erfasst wird; und
Ausgeben (408) einer Benachrichtigung, wenn eine vorbestimmte Mindestanzahl von Fehlerpixeln in dem ersten Interessenbereich für jeden einer vorbestimmten Anzahl aufgezeichneter Prozessbilder bestimmt (507) wird.

13. Sprühtrockner oder Sprühkühlsystem (100) umfassend:
eine Sprühtrocknungs- oder Sprühkühlkammer (101) mit einem Lufteinlass für die Zufuhr von Trocknungsluft (102) oder von Kühlluft in die Trocknungskammer (101);
eine oder mehrere Sprühdüsen (104, 301a, 301b), die jeweils einen Ausgang für das Zuführen eines Einsatzmaterials aufweist, das sprühgetrocknet oder sprühgekühlt in die Kammer (101) eingeführt werden soll; und
eine oder mehrere optische Digitalkameras (108a, 108b, 108c, 108d, 201, 203, 206), die zum Erhalten von Bildern angeordnet sind, die einen Bildbereich aufweisen, der mindestens einen ersten Interessenbereich umfasst, der mindestens einen Teil einer Sprühdüse (104, 301a, b) und/oder einen Bereich neben einem Sprühdüsenausgang abdeckt;
**dadurch gekennzeichnet, dass** das Kühlsystem (100) ferner umfasst:
ein Computersteuersystem (109), das konfiguriert ist, um Bilder zu speichern oder aufzuzeichnen, die durch die Digitalkamera(s) (108a, 108b, 108c, 108d, 201, 203, 206) erhalten werden, und um Bilder, die von der gleichen Kamera zu verschiedenen Zeitpunkten erhalten wurden, zu vergleichen, wobei das Steuersystem (109) ferner konfiguriert ist, um Unterschiede zwischen verglichenen Bildern zu erfassen und eine Fehlerbenachrichtigung auf der Grundlage dieser erfassten Unterschiede auszugeben.

14. System nach Anspruch 13, wobei die eine oder mehreren Kameras (108a, 108b, 108c, 108d, 201, 203, 206) konfiguriert sind, um Bilder im sichtbaren Frequenzspektrum zu erhalten.

15. System nach Anspruch 13 oder 14, wobei das System (100) ferner eine Anzahl von lichtemittierenden Lampen (202, 204, 205, 207, 208, 209, 210, 211, 212) zur Bereitstellung von Licht im sichtbaren Frequenzspektrum umfasst.

## Revendications

1. Procédé (400) pour la surveillance d'accumulations de dépôts sur des buses de pulvérisation (104, 301a, b) dans une chambre de séchage par pulvérisation ou de refroidissement par pulvérisation (101), ledit procédé comprenant :
l'introduction (401) d'air de séchage (102) ou d'air de refroidissement dans la chambre (101) ;
l'introduction (401) d'un matériau d'alimentation à sécher par pulvérisation ou à refroidir par pulvérisation dans la chambre (101) par le biais d'une ou de plusieurs buses de pulvérisation (104, 301a, 301b), pour ainsi obtenir un ou plusieurs jets de matériau d'alimentation en contact avec de l'air de séchage ou de refroidissement ; et
l'obtention (402, 403) et l'enregistrement d'images à l'aide d'une ou de plusieurs caméras optiques numériques (108a, 108b, 108c, 201, 203, 206), lesdites images comportant une zone d'image comprenant une première zone d'intérêt couvrant au moins une partie d'une buse de pulvérisation (104, 301a, 301b) et/ou une partie d'un jet de matériau d'alimentation correspondant à une buse de pulvérisation ;
ledit procédé étant **caractérisé en ce que** :
l'étape d'obtention et d'enregistrement d'images (402, 403) comprend l'obtention (402) et l'enregistrement d'une image de référence à l'aide des une ou plusieurs caméras optiques numériques (108a, 108b, 108c, 201, 203, 206), ladite image de référence comportant une zone d'image comprenant la première zone d'intérêt ; et
l'obtention (403) et l'enregistrement répétés d'images de processus à l'aide des une ou plusieurs caméras optiques numériques (108a, 108b, 108c, 201, 203, 206), lesdites images de processus couvrant la même zone d'image que l'image de référence ;
et **en ce que** le procédé comprend :
la comparaison (404) d'au moins une partie des images de processus enregistrées avec l'image de référence, et la détection (405, 501) de différences dans la première zone d'intérêt entre l'image de référence et chacune parmi un certain nombre d'images de processus comparées à l'image de référence ; et
l'envoi (408) d'une notification sur la base des différences détectées.

2. Procédé selon la revendication 1, dans lequel une notification est envoyée (408) lorsqu'une différence minimale prédéterminée est détectée (507) pour chacune parmi un nombre prédéterminé d'images de processus enregistrées.

3. Procédé selon la revendication 1 ou 2, dans lequel l'étape de détection (405, 501) de différences dans la première zone d'intérêt entre l'image de référence et chacune parmi un certain nombre d'images de processus comparées à l'image de référence comprend :
la détection (405, 501) pour la première zone d'intérêt d'une différence de pixel, si présente, entre des pixels adressés similaires dans l'image de référence et chacune parmi un certain nombre d'images de processus comparées à l'image de référence ; et
la détermination (502, 503), pour chacune des images de processus comparées à l'image de référence ou une partie de celles-ci, d'un nombre de pixels d'erreur correspondant au nombre de pixels adressés similaires dans la première zone d'intérêt pour lesquels une différence de pixel minimale prédéterminée est détectée ; et dans lequel l'étape d'envoi (408) d'une notification sur la base des différences détectées comprend :
l'envoi (408) d'une notification lorsqu'un nombre minimum prédéterminé de pixels d'erreur dans la première zone d'intérêt est déterminé (507) pour chacune parmi un nombre prédéterminé d'images de processus enregistrées.

4. Procédé selon la revendication 3, dans lequel :
la zone d'image de l'image de référence comprend plusieurs zones d'intérêt ;
la détection (501) d'une différence entre des pixels adressés similaires dans l'image de référence et une image de processus est effectuée pour au moins deux zones d'intérêt ;
un nombre de pixels d'erreur est déterminé (502) pour chacune desdites au moins deux zones d'intérêt pour chacune des images de processus comparées à l'image de référence ou une partie de celles-ci ;
chacune desdites au moins deux zones d'intérêt comporte un nombre minimum prédéterminé correspondant de pixels d'erreur ; et
une notification (408) est envoyée lorsque le nombre déterminé de pixels d'erreur atteint le nombre minimum prédéterminé correspondant de pixels d'erreur (503) dans l'une au moins des au moins deux zones d'intérêt pour chacune parmi un nombre prédéterminé (507) d'images de processus obtenues.

5. Procédé selon la revendication 4, dans lequel :
la zone d'image de l'image de référence enregistrée comprend en outre une deuxième zone d'intérêt, la première zone d'intérêt couvrant des parties d'une première buse de pulvérisation (104, 301a, 301b) et la deuxième zone d'intérêt couvrant des parties d'une deuxième buse de pulvérisation (104, 301a, 301b) ;
des parties correspondantes de la première buse et de la deuxième buse sont plus grandes pour la première buse que pour la deuxième buse dans l'image de référence ; et
le nombre minimum prédéterminé correspondant de pixels d'erreur (503) est plus grand pour la première zone d'intérêt couvrant la première buse que pour la deuxième zone d'intérêt couvrant la deuxième buse.

6. Procédé selon l'une quelconque des revendications 3 à 5, dans lequel la détection (501) d'une différence de pixel entre des pixels adressés similaires dans l'image de référence et l'image de processus est au moins partiellement basée sur une différence dans l'intensité de pixel, et dans lequel la différence de pixel minimale prédéterminée est définie comme une différence minimale dans l'intensité de pixel entre des pixels adressés similaires dans l'image de référence et l'image de processus.

7. Procédé selon la revendication 6, dans lequel la différence minimale dans l'intensité de pixel est fixée à au moins 25 %, par exemple à au moins 30 %, par exemple à au moins 35 % ou par exemple à au moins 39 %.

8. Procédé selon l'une quelconque des revendications 3 à 7, dans lequel, pour une zone d'image d'intérêt couvrant au moins une partie d'une buse de pulvérisation, le nombre minimum prédéterminé de pixels d'erreur (503) pour ladite zone d'intérêt de l'image de référence est déterminé sur la base du nombre de pixels représentant une mesure caractéristique de la buse (104, 301a, 301b).

9. Procédé selon la revendication 8, dans lequel, pour ladite zone d'intérêt couvrant une partie d'une buse de pulvérisation, le nombre minimum prédéterminé de pixels d'erreur (503) est plus grand que le nombre de pixels représentant la mesure caractéristique de la buse (104, 301a, 301b).

10. Procédé selon la revendication 9, dans lequel le nombre minimum prédéterminé de pixels d'erreur (503) est au moins 1,5 fois plus grand, par exemple au moins 2 fois plus grand, par exemple au moins 2,5 fois plus grand, ou par exemple au moins 3 fois plus grand que le nombre de pixels représentant la mesure caractéristique de la buse (104, 301a, 301b).

11. Procédé selon l'une quelconque des revendications 3 à 10, comprenant en outre une étape de préfiltrage exécutée sur des différences de pixel détectées dans une zone d'intérêt pour une image de processus obtenue, avant la détermination du nombre de pixels d'erreur, ledit préfiltrage comprenant le filtrage de différences de pixel détectées reconnues comme une ou plusieurs formes prédéterminées dans l'image de processus, lesdites une ou plusieurs formes prédéterminées comprenant une forme substantiellement rectangulaire et/ou une forme trapézoïdale ou de trapèze isocèle.

12. Procédé selon l'une quelconque des revendications 1 à 11, dans lequel il est prévu un système de commande informatique (109) configuré pour stocker ou enregistrer des images obtenues par la/les caméra(s) optique(s) numérique(s) (108a, 108b, 108c, 201, 203, 206), le système de commande informatique (109) étant en outre configuré pour exécuter les étapes suivantes :
comparaison (404) d'une partie au moins des images de processus enregistrées avec l'image de référence et détection (405, 501), pour la première zone d'intérêt, d'une différence de pixel, si présente, entre des pixels adressés similaires dans l'image de référence et chacune parmi un certain nombre d'images de processus comparées à l'image de référence ;
la détermination (502, 503), pour chacune des images de processus comparées à l'image de référence ou une partie de celles-ci, d'un nombre de pixels d'erreur correspondant au nombre de pixels adressés similaires dans la première zone d'intérêt pour lesquels une différence de pixel minimale prédéterminée est détectée ; et
l'envoi (408) d'une notification lorsqu'un nombre minimum prédéterminé de pixels d'erreur dans la première zone d'intérêt est déterminé (507) pour chacune parmi un nombre prédéterminé d'images de processus enregistrées.

13. Système de séchage par pulvérisation ou de refroidissement par pulvérisation (100) comprenant :
une chambre de séchage par pulvérisation ou de refroidissement par pulvérisation (101) avec une entrée d'air pour l'introduction d'air de séchage (102) ou d'air de refroidissement dans la chambre de séchage (101) ;
une ou plusieurs buses de pulvérisation (104, 301a, 301b) comportant respectivement une sortie pour l'introduction d'un matériau d'alimentation à sécher par pulvérisation ou à refroidir par pulvérisation dans la chambre (101) ; et
une ou plusieurs caméras optiques numériques (108a, 108b, 108c, 201, 203, 206) conçues pour obtenir des images comportant une zone d'image comprenant au moins une première zone d'intérêt couvrant au moins une partie d'une buse de pulvérisation (104, 301a, 301b) et/ou une zone adjacente à la sortie de buse de pulvérisation ;
**caractérisé en ce que** le système de refroidissement (100) comprend en outre :
un système de commande informatique (109) configuré pour stocker ou enregistrer des images obtenues par la/les caméra(s) optique(s) numérique(s) (108a, 108b, 108c, 201, 203, 206) et pour comparer des images obtenues par la même caméra à des moments différents, ledit système de commande (109) étant en outre configuré pour détecter des différences entre des images comparées et pour envoyer une notification d'erreur sur la base desdites différences détectées.

14. Système selon la revendication 13, dans lequel les une ou plusieurs caméras optiques numériques (108a, 108b, 108c, 201, 203, 206) sont configurées pour obtenir des images dans le spectre de fréquence visible.

15. Système selon la revendication 13 ou 14, dans lequel le système (100) comprend en outre un certain nombre de lampes électroluminescentes (202, 204, 205, 207, 208, 209, 210, 211, 212) destinées à fournir de la lumière dans le spectre de fréquence visible.
